# DEMANDE DE BREVET EUROPEEN

(11) **EP 2 573 674 A1**
(43) Date de publication de la demande: **27.03.2013**
(21) Numéro de dépôt: 12184362.7
(22) Date de dépôt: 14.09.2012
(51) Int. Cl.: G06F 9/44, G05B 19/042

(54) **Logiciel de gestion d'un système d'automatisme**

(30) Priorité: 26.09.2011 FR 1158546
(71) Demandeur: Schneider Electric Industries SAS, 92500 Rueil-Malmaison (FR)
(72) Inventeur: Camuñez, Jesús, 08950 Esplugues Llobregat (ES); Montes, Aleix, 08024 Barcelona (ES); Ortiz, Antonio, 08026 Barcelona (ES)
(74) Mandataire: Dufresne, Thierry

(57) **Abrégé**

L'invention concerne un système de gestion d'un système d'automatisme comportant un logiciel comprenant :
● un gestionnaire de projets ;
● un gestionnaire d'applications ;
● et un gestionnaire de topologies ;

ledit gestionnaire d'applications comprenant une unique description fonctionnelle orientée objet dudit système d'automatisme, basée sur un méta-modèle objet, ladite description fonctionnelle comprenant une pluralité d'objets fonctionnels composites qui comportent chacun une facette de contrôle et une facette de supervision, lesdites facettes de contrôle et de supervision comprenant une interface de mappage ;
ledit gestionnaire de topologies comprenant une description topologique orientée objet dudit système d'automatisme, basée sur ledit méta-modèle objet, et comprenant une pluralité d'objets topologiques ;
ledit gestionnaire de projets comprenant un projet de contrôle et un projet de supervision relatifs audit système d'automatisme ;
lesdites facettes de contrôle étant affectées audit projet de contrôle ;
lesdites facettes de supervision étant affectées audit projet de supervision ;
une partie desdits objets topologiques étant mappés avec lesdites facettes de contrôle et de supervision d'une partie desdits objets composites, par l'intermédiaire desdites interfaces de mappage.

## Description

### Domaine technique de l'invention

La présente invention concerne le domaine des systèmes d'automatisme et se rapporte en particulier à un système comprenant un logiciel de gestion de tels systèmes d'automatisme.

### Etat de la technique

Aujourd'hui, pour gérer une usine, une chaîne de production ou tout système d'automatisme complexe, une pluralité de logiciels sont nécessaires. Ces différents logiciels répondent à des logiques de conception variées et ne sont en principe pas interopérables.

Ainsi, dans l'état de la technique, une architecture logicielle globale comprenant des outils pour gérer un système d'automatisme est généralement organisée en strates successives allant de la programmation bas niveau à la supervision globale. Des logiciels conçus et développés de manière totalement indépendante permettent de gérer chacun un aspect de la gestion du système : gestion des entrées-sorties, gestion des automates, programmation, contrôle des process, pilotage des équipements, supervision des process ...etc. Dans cette organisation, à titre d'exemple, l'outil logiciel permettant la gestion de l'aspect "contrôle" du système d'automatisme et l'outil logiciel permettant la supervision des process ou encore les interfaces homme-machine destinées à l'utilisateur final ne sont pas conçus pour être facilement interconnectés.

Pour être utilisable par un utilisateur final dans le contexte d'un système d'automatisme complexe, cette multitude de logiciels indépendants doit faire l'objet d'un important travail d'intégration. L'architecture globale qui en résulte reste extrêmement complexe et difficile à exploiter par l'utilisateur final.

Le document US 6643 555 B1 décrit un procédé pour générer une application de contrôle d'un système d'automatismes, notamment à partir d'un modèle physique et d'un modèle topologique représentant ledit système d'automatismes. Cependant, ce document ne décrit pas de moyens permettant de faire cohabiter et coopérer des logiciels hétérogènes de contrôle, de supervision ..etc. dudit système d'automatismes au sein d'un environnement unifié.

Pour pallier cet inconvénient majeur de complexité d'utilisation pour l'utilisateur final, la présente invention concerne un système, et notamment un logiciel fondé sur un méta-modèle objet et comprenant des moyens pour permettre à des outils logiciels indépendants de coopérer au sein d'une architecture unifiée.

A cet effet, la présente invention prévoit un système logiciel fondé sur une programmation orientée objet développée sur la base d'un méta-modèle objet unique. Ledit méta-modèle objet unique est conçu pour permettre à la fois la description fonctionnelle et la description topologique d'un système d'automatisme. Dans le méta-modèle objet mis en oeuvre dans le logiciel selon l'invention, des objets fonctionnels destinés à décrire un aspect fonctionnel - par exemple le contrôle - du système d'automatisme considéré peuvent comprendre des interfaces de "mapping" permettant, lors d'une étape spécifique, de mapper lesdits objets fonctionnels avec des objets topologiques destinés à décrire un aspect topologique du même système d'automatisme, lesdits objets topologiques étant configurés, c'est-à-dire préalablement associés à leurs correspondants matériels respectifs. L'étape de "mapping" consiste ainsi à projeter les objets fonctionnels représentant la logique d'un système d'automatisme sur leurs matériels respectifs.

Le méta-modèle objet unique permet ainsi de décrire un système d'automatismes d'un point de vue topologique et d'un point de vue fonctionnel, notamment par l'intermédiaire d'objets composites présentant différentes facettes, ces objets composites étant aptes à être appelés, édités, modifiés, ...etc., selon le cas, par différents logiciels qui, par conséquent, peuvent interagir durant leur exécution bien qu'ils n'aient pas été a priori conçus pour cela.

### Exposé de l'invention

En résumé, l'invention consiste en un système de gestion d'un système d'automatisme comportant un logiciel comprenant :
- un gestionnaire de projets ;
- un gestionnaire d'applications ;
- et un gestionnaire de topologies ;
ledit gestionnaire d'applications comprenant une unique description fonctionnelle orientée objet dudit système d'automatisme, basée sur un méta-modèle objet, ladite description fonctionnelle comprenant une pluralité d'objets fonctionnels composites qui comportent chacun une facette de contrôle et une facette de supervision, lesdites facettes de contrôle et de supervision comprenant une interface de mappage ;
ledit gestionnaire de topologies comprenant une description topologique orientée objet dudit système d'automatisme, basée sur ledit méta-modèle objet, et comprenant une pluralité d'objets topologiques ;
ledit gestionnaire de projets comprenant un projet de contrôle et un projet de supervision relatifs audit système d'automatisme ;
lesdites facettes de contrôle étant affectées audit projet de contrôle ;
lesdites facettes de supervision étant affectées audit projet de supervision ;
une partie desdits objets topologiques étant mappés avec lesdites facettes de contrôle et de supervision d'une partie desdits objets fonctionnels composites par l'intermédiaire desdites interfaces de mappage.

Avantageusement, ledit système d'automatisme comporte un automate programmable de contrôle apte à exécuter ledit projet de contrôle et un ordinateur de supervision apte à exécuter ledit projet de supervision.

Avantageusement, ledit système d'automatisme comporte une base de données comprenant ladite description fonctionnelle et ladite description topologique.

Avantageusement, lesdits objets fonctionnels composites peuvent comprendre des interfaces logiques pour connecter entre elles lesdites facettes de contrôle et de supervision qu'ils comportent.

Avantageusement, le système selon l'invention comprend par ailleurs des objets topologiques composites constitués d'au moins deux facettes topologiques issues d'un ensemble de facettes topologiques d'un premier type et d'un ensemble de facettes topologiques d'un deuxième type.

Avantageusement, lesdits objets topologiques composites comprennent des interfaces physiques pour connecter entre elles lesdites facettes topologiques qu'ils comportent.

Avantageusement, lesdits objets topologiques comprennent des interfaces de communication aptes à permettre auxdits objets topologiques de communiquer entre eux et d'échanger des données.

Avantageusement, le système selon l'invention comporte en outre un éditeur de modèles d'objets comprenant des moyens pour créer ledit méta-modèle objet comprenant des modèles d'objets fonctionnels et des modèles d'objets topologiques.

Avantageusement, le système selon l'invention comporte un éditeur de topologies comprenant des moyens d'édition graphique de topologies pour créer ladite description topologique du système d'automatisme.

Avantageusement, le système selon l'invention comporte un éditeur fonctionnel comprenant des moyens d'édition graphique fonctionnelle pour créer ladite description fonctionnelle du système d'automatisme.

Avantageusement, le système selon l'invention comporte un éditeur de mappage comprenant des moyens graphiques de mappage pour mapper des objets topologiques avec des facettes fonctionnelles comprenant une interface de mappage.

### Brève description des figures

D'autres caractéristiques et avantages vont apparaître dans la description détaillée qui suit, faite en regard des dessins annexés qui représentent :
- la figure 1 : le schéma d'un exemple simple de système d'automatisme ;
- la figure 2 : un schéma bloc représentant la création de modèles d'objets ;
- la figure 3 : un schéma représentant la mise en correspondance de matériels réels d'un système d'automatisme avec des objets d'une description orientée objet dudit système d'automatisme.

### Description détaillée d'un mode de réalisation

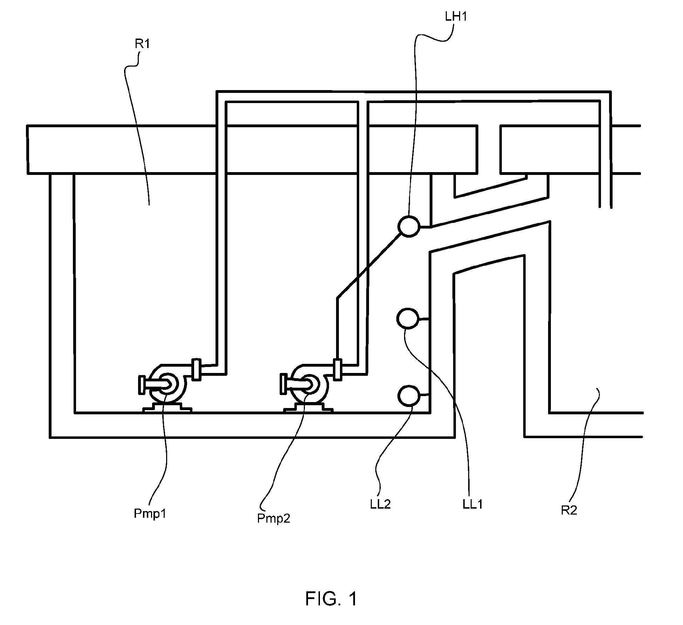

Pour illustrer l'invention, la description qui suit se fonde sur l'exemple de système d'automatisme non limitatif schématiquement représenté à la figure 1. Cet exemple concerne un système de réservoirs d'eau R1, R2 collectant l'eau de pluie. Ce système comprend deux pompes Pmp1, Pmp2 pour transférer l'eau d'un premier réservoir R1 à un second réservoir R2. Il comprend par ailleurs des capteurs LL1, LL2, LH1 pour contrôler le niveau d'eau dans le premier réservoir R1.

Une première pompe Pmp1 traite du niveau d'eau dans les premier et second réservoirs R1, R2, tandis qu'une deuxième pompe Pmp2 prend le relais en cas de maintenance en cours ou de défaut détecté sur la première.

Les trois capteurs contrôlent différents niveaux de remplissage du premier réservoir R1 : très bas LL2, bas LL1, et haut LH1. Le capteur LL2 correspondant au niveau de remplissage très bas est directement relié au circuit d'alimentation des deux pompes Pmp1, Pmp2 de manière à empêcher que lesdites pompes ne tournent à vide.

Dans le système selon l'invention, ce système d'automatisme est décrit sur la base d'un méta-modèle objet permettant d'en faire à la fois une description fonctionnelle et une description topologique.

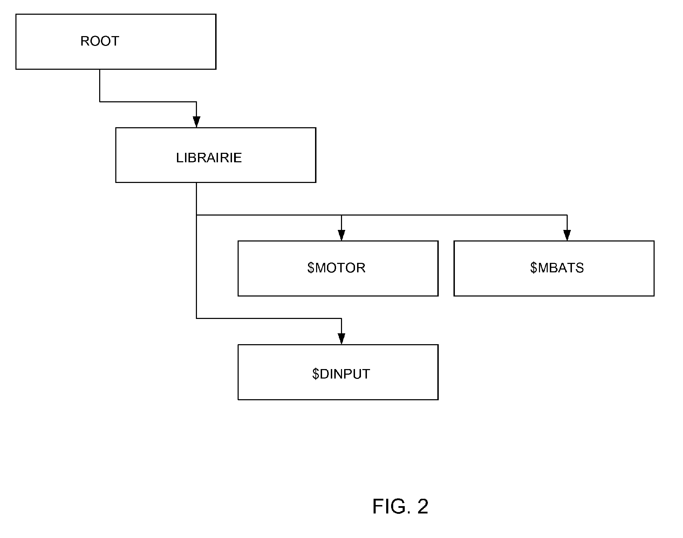

En pratique, ledit méta-modèle comprend des modèles d'objet, correspondant à des objets-types abstraits, non configurés. A partir de ces modèles d'objets, un utilisateur peut décrire le système d'automatisme considéré. Par exemple, comme représenté à la figure 2, le système selon l'invention comporte un modèle d'objet "$MOTEUR", un modèle d'objet "$MBATS", correspondant à un démarreur pour moteur, et un modèle d'objet "$DINPUT", correspondant à des objets de type entrées/sorties numériques. Ces modèles d'objets peuvent être contenus dans une librairie de modèles d'objets personnalisables, correspondant à la LIBRAIRIE rattachée à la racine ROOT du logiciel selon l'invention, sur la figure 2. Les deux pompes Pmp1, Pmp2 sont alors décrites à partir du modèle d'objet "$MOTEUR " et du modèle d'objet "$MBATS " et les trois capteurs sont décrits à partir du modèle d'objet "$DINPUT ".

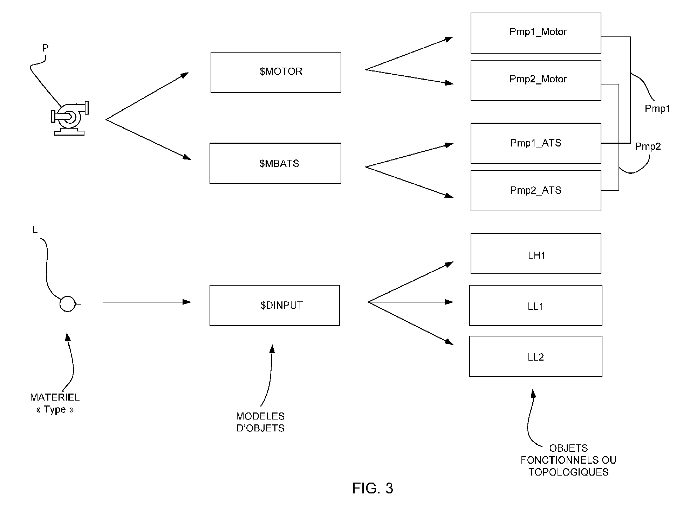

Comme représenté à la figure 3, partant de ces objets, issus d'un unique méta-modèle objet, le système selon l'invention permet de réaliser une description fonctionnelle comprenant des objets fonctionnels et une description topologique comprenant des objets topologiques du système d'automatisme considéré. Un objet matériel réel, tel qu'une pompe P est ainsi décrite à l'aide des modèles d'objet "$MOTEUR" et "$MBATS". Dans le système d'automatisme considéré, il y a deux pompes Pmp1 et Pmp2 ; deux instances de chaque modèle d'objet "$MOTEUR" et "$MBATS" sont donc créées pour décrire ces deux pompes, l'instance d'un modèle d'objet étant l'adaptation de ce dernier au système d'automatisme considéré. La description orientée objet du système d'automatisme comprend donc, pour la première pompe Pmp1, une instance pour le démarreur nommée Pmp1_ATS et une instance pour le moteur nommée Pmp1_Motor, et pour la seconde pompe Pmp2, une instance pour le démarreur nommée Pmp2_ATS et une instance pour le moteur nommée Pmp2_Motor. De la même manière, trois instances du modèle d'objet "$DINPUT" apte à représenter des objets matériels de type capteurs sont créées, correspondant aux trois capteurs LL1, LL2 et LH1 du système d'automatisme considéré. Ces descriptions orientées objet sont destinées à être stockées sur une base de données.

Par ailleurs, le système selon l'invention a pour caractéristique essentielle de faire cohabiter des outils logiciels indépendants, permettant notamment de gérer, par exemple, les aspects de contrôle et de supervision du système d'automatisme par l'intermédiaire de deux outils logiciels différents. Selon l'invention, la description fonctionnelle du système d'automatisme comporte alors des objets fonctionnels de type composites incluant différents sous-objets fonctionnels de type facettes ou composites, comme par exemple une facette de contrôle et une facette de supervision. La communication entre les différents objets fonctionnels de type composites et facettes est établie par l'intermédiaire d'un autre type de modèles d'objets dénommés interfaces.

Ainsi, sur la base d'un méta-modèle objet unique, partant par exemple des modèles d'objets "$MOTEUR", "$MBATS" et "$DINPUT", l'utilisateur du système selon l'invention définit d'un côté les facettes de contrôle pour construire l'aspect contrôle de la description fonctionnelle du système d'automatisme et d'un autre côté les facettes de supervision pour construire l'aspect supervision de la même description fonctionnelle du même système d'automatisme. L'assemblage d'une facette de contrôle et d'une facette de supervision d'un même objet constitue un objet fonctionnel composite. L'utilisateur peut également associer des objets composites fonctionnels entre eux pour former des objets composites fonctionnels plus complexes.

A partir des mêmes modèles d'objets "$MOTEUR", "$MBATS" et "$DINPUT", l'utilisateur du système selon l'invention définit d'autre part les facettes topologiques pour construire la description topologique, c'est-à-dire la description de l'architecture matérielle, du système d'automatisme considéré. L'assemblage de deux facettes topologiques d'un même objet constitue un objet topologique composite. L'utilisateur peut également associer des objets composites fonctionnels entre eux pour former des objets composites fonctionnels plus complexes.

Le méta-modèle objet unique comprend également des objets "interfaces". Il existe quatre types d'interfaces :
- les interfaces logiques permettant d'interconnecter des objets fonctionnels entre eux, et notamment, par exemple, une facette de contrôle avec une facette de supervision ;
- les interfaces physiques permettant d'interconnecter des objets topologiques entre eux ;
- les interfaces de communication permettant à des objets topologiques de communiquer entre eux ;
- les interfaces de mapping permettant d'associer des objets fonctionnels avec des objets topologiques, notamment par exemple un objet de contrôle ou de supervision avec un objet topologique.

Les interfaces sont, selon leur type, des attributs éventuels des objets fonctionnels ou topologiques, facettes ou composites.

Pour sa mise en oeuvre, le système selon l'invention comprend différents "gestionnaires", par exemple des éditeurs graphiques, qui peuvent correspondre à différentes vues, à différents explorateurs au sein d'un même logiciel, ou à des logiciels distincts aptes à coopérer au sein d'une interface homme-machine unifiée ou intégrée.

Le premier éditeur graphique pouvant être mis en oeuvre est un éditeur de modèles d'objets. L'éditeur de modèles d'objets permet de créer des objets "types", facettes, composites ou interfaces, rassemblés dans des librairies de modèles d'objets à la disposition de l'utilisateur.

Dans un gestionnaire d'applications, l'utilisateur se trouve, par exemple à l'aide d'un éditeur de description fonctionnelle disposant de moyens d'édition graphique, en mesure de configurer des objets fonctionnels et de créer notamment des facettes de contrôle et des facettes de supervision aptes à être assemblées en objets fonctionnels composites, de manière à réaliser une description fonctionnelle complète du système d'automatisme. Cette description fonctionnelle a l'avantage de présenter différents angles, correspondant aux différents outils logiciels assurant la gestion du système d'automatisme. Par exemple, l'aspect "contrôle" du système d'automatisme est décrit au travers de facettes de contrôle tandis que l'aspect "supervision" est décrit par l'intermédiaire de facettes de supervision.

Le système selon l'invention comprend un gestionnaire de topologies qui permet, par l'intermédiaire d'un éditeur de description topologique disposant de moyens d'édition graphique, de réaliser et de configurer la description topologique complète du système d'automatisme. Partant des librairies de modèles d'objets, l'utilisateur détermine la description topologique du système d'automatisme et en réalise la configuration. Cette étape de configuration consiste à associer les objets topologiques de la description topologique au matériel "réel". Ainsi, les pompes du modèle objet sont associées à des pompes bien déterminées, au sens matériel, du système d'automatisme. Il en va de même pour les capteurs. Par ailleurs, le système d'automatisme peut être géré par un automate, représenté par un objet dans la description topologique du système d'automatisme ; l'étape de configuration permet d'associer l'automate au sens matériel du terme à l'objet topologique représentant ledit automate dans la description topologique du système d'automatisme.

De la même manière, le bus de communication reliant les différents matériels entre eux peut être représenté dans la description topologique par un objet "réseau Ethernet" associé durant la phase de configuration à un réseau Ethernet physique bien déterminé.

Le système selon l'invention comprend enfin un gestionnaire de projets comprenant des projets destinés à être exécutés sur des ordinateurs ou des automates. Pour chaque outil logiciel de gestion, de contrôle, de supervision ...etc. du système d'automatisme, un projet est créé dans ledit gestionnaire de projets. Il existe par conséquent au moins un projet de contrôle auquel les facettes de contrôle sont affectées et un projet de supervision auquel les facettes de supervision sont affectées.

Pour finir, la mise en oeuvre du système selon l'invention comprend une phase de "mapping" permettant de mettre en correspondance un objet fonctionnel, par exemple une facette de contrôle ou une facette de supervision, comprenant des interfaces de mappage adaptées, avec des objets matériels associés à des objets topologiques de la description topologique du système d'automatisme. Cette caractéristique est essentielle car elle permet à l'utilisateur d'avoir réuni sur une même interface une vision de tous les aspects de gestion de son système d'automatisme, tant ses aspects fonctionnels, de contrôle ou de supervision, que ses aspects matériels, tout en disposant d'une vision synthétique de la correspondance entre les paramètres fonctionnels et les paramètres matériels dudit système d'automatisme.

En résumé et comme décrit dans le paragraphe "Etat de la technique", la gestion d'une ou plusieurs usines, de chaînes de production ou de tout système d'automatisme implique l'utilisation de différents logiciels, chacun d'entre eux ayant pour fonction de gérer différents niveaux spécifiques dudit système d'automatisme. D'autre part, afin de répondre aux différentes problématiques d'amélioration de la productivité, les objectifs suivant sont généralement poursuivis :
- réduction des coûts d'ingénierie, opérationnels et de maintenance ;
- amélioration constante des installations et des techniques de production ;
- amélioration de la qualité des produits manufacturés ;
- protection des hommes, des biens et de l'environnement ;
- augmentation du retour sur investissement.

Le système selon l'invention est conçu pour répondre au mieux à ces contraintes en fournissant une solution globale tenant compte des aspects de programmation bas niveau comme de la supervision globale, pour la gestion des opérations de production et de maintenance d'un système d'automatisme.

Cette solution est implémentée notamment par :
- un environnement logiciel permettant à l'utilisateur la gestion de la configuration de projets et d'applications décrivant un système d'automatisme ;
- un environnement unique facilitant la gestion et la maintenance dudit système d'automatisme ;
- des bibliothèques de modèles d'objets ;
- des mécanismes d'échange de données entre objets.

## Revendications

1. Système de gestion d'un système d'automatisme comportant un logiciel comprenant :
• un gestionnaire de projets ;
• un gestionnaire d'applications ;
• et un gestionnaire de topologies ;
ledit gestionnaire d'applications comprenant une unique description fonctionnelle orientée objet dudit système d'automatisme, basée sur un méta-modèle objet, ladite description fonctionnelle comprenant une pluralité d'objets fonctionnels composites qui comportent chacun une facette de contrôle et une facette de supervision, lesdites facettes de contrôle et de supervision comprenant une interface de mappage ;
ledit gestionnaire de topologies comprenant une description topologique orientée objet dudit système d'automatisme, basée sur ledit méta-modèle objet, et comprenant une pluralité d'objets topologiques ;
ledit gestionnaire de projets comprenant un projet de contrôle et un projet de supervision relatifs audit système d'automatisme ;
lesdites facettes de contrôle étant affectées audit projet de contrôle ;
lesdites facettes de supervision étant affectées audit projet de supervision ;
une partie desdits objets topologiques étant mappés avec lesdites facettes de contrôle et de supervision d'une partie desdits objets fonctionnels composites par l'intermédiaire desdites interfaces de mappage.

2. Système selon la revendication 1, le système d'automatisme comportant un automate programmable de contrôle apte à exécuter ledit projet de contrôle et un ordinateur de supervision apte à exécuter ledit projet de supervision.

3. Système selon l'une des revendications précédentes, ledit système d'automatisme comportant une base de données comprenant ladite description fonctionnelle et ladite description topologique.

4. Système selon l'une des revendications précédentes, lesdits objets fonctionnels composites comprenant des interfaces logiques pour connecter entre elles lesdites facettes de contrôle et de supervision qu'ils comportent.

5. Système selon l'une des revendications précédentes, comprenant des objets topologiques composites constitués d'au moins deux facettes topologiques issues d'un ensemble de facettes topologiques d'un premier type et d'un ensemble de facettes topologiques d'un deuxième type.

6. Système selon la revendication 5, lesdits objets topologiques composites comprenant des interfaces physiques pour connecter entre elles lesdites facettes topologiques qu'ils comportent.

7. Système selon l'une des revendications précédentes, lesdits objets topologiques comprenant des interfaces de communication aptes à permettre auxdits objets topologiques de communiquer entre eux et d'échanger des données.

8. Système selon l'une des revendications précédentes, **caractérisé en ce qu'il** comporte un éditeur de modèles d'objets comprenant des moyens pour créer ledit méta-modèle objet comprenant des modèles d'objets fonctionnels et des modèles d'objets topologiques.

9. Système selon l'une des revendications précédentes, **caractérisé en ce qu'il** comporte un éditeur de topologies comprenant des moyens d'édition graphique de topologies pour créer ladite description topologique du système d'automatisme.

10. Système selon l'une des revendications précédentes, **caractérisé en ce qu'il** comporte un éditeur fonctionnel comprenant des moyens d'édition graphique fonctionnelle pour créer ladite description fonctionnelle du système d'automatisme.

11. Système selon l'une des revendications précédentes, **caractérisé en ce qu'il** comporte un éditeur de mappage comprenant des moyens graphiques de mappage pour mapper des objets topologiques avec des facettes fonctionnelles comprenant une interface de mappage.
